Europäisches Patentamt

European Patent Office

Office européen des brevets

(19)

(11) **EP 1 154 602 A1**

(12) **EUROPEAN PATENT APPLICATION**

(43) Date of publication:
**14.11.2001 Bulletin 2001/46**

(51) Int Cl.[7]: **H04L 25/02**, H04L 27/26

(21) Application number: **00303886.6**

(22) Date of filing: **09.05.2000**

(84) Designated Contracting States:
**AT BE CH CY DE DK ES FI FR GB GR IE IT LI LU MC NL PT SE**
Designated Extension States:
**AL LT LV MK RO SI**

(71) Applicant: **LUCENT TECHNOLOGIES INC.**
**Murray Hill, New Jersey 07974-0636 (US)**

(72) Inventors:
• **Sanzi, Friedrich Reinhard**
**73230 Baden Wuerttemberg (DE)**
• **Ten Brink, Stephan**
**Allmersbach (DE)**

(74) Representative: **Williams, David John et al**
**Lucent Technologies UK Limited,**
**5 Mornington Road**
**Woodford Green, Essex IG8 0TU (GB)**

(54) **Method and apparatus for channel estimation in a multicarrier radio system**

(57)    A channel estimator is described for pilot symbol aided coherent detection of multicarrier modulated radio signals in which a single radio channel comprises a plurality of sub channels. The channel estimator is operative to estimate the channel response of sub channels at occurrences of known pilot symbols transmitted in the sub channel, and to interpolate channel responses between occurrences of the pilot symbols in both the frequency direction and the time direction. The two dimensional interpolation, fully exploits the continuity of the channel response in both the frequency direction and the time direction.

FIG. 8

EP 1 154 602 A1

**Description**

This invention relates to a method and apparatus for channel estimation in a multicarrier radio system.

The background to the invention will be explained with reference to a mobile telecommunications system. The reader will appreciate that the invention can be applied to other forms of radio communication e.g. broadcast radio or television.

When the difference in propagation delays over different propagation paths approaches or exceeds the symbol duration, intersymbol interference degrades the signal severely. The problem may be overcome with multicarrier modulation. The key idea of digital multicarrier modulation is to use a plurality $N$ of parallel narrow-banded communication signals (symbol duration $T$) instead of one broad-banded single carrier signal (symbol duration $T/N$). By this, the multicarrier modulated signal is more robust against multipath propagation on the mobile radio channel and can tolerate approximately $N$ times longer delays among signal components in comparison to a broad-banded single carrier signal.

In mobile communication systems, the propagation conditions between base station (BS) and mobile terminal (MT) are inherently time-varying: The received signal at the MT can be affected by severe fading, depending on the terrain (hilly, rural, urban) and the speed of the MT. This makes channel estimation a demanding task at the receiver of both BS and MT. Prior art for channel estimation in multicarrier systems can be found in Hoeher, P., Kaiser, S., Robertson, P., "Two-dimensional pilot-symbol-aided channel estimation by Wiener filtering", ICASSP-97 (IEEE International Conference on Acoustics, Speech, and Signal Processing), April 1997, pp. 1845-1848. In the conventional system, the receiver knows the position and the value of the pilot symbols and thus can estimate the channel response for these distinguished positions in the time/frequency grid of the multicarrier modulated signal. Based on these known samples the remaining channel responses are estimated by applying conventional methods of interpolation between consecutive pilot symbols in respective channels, and by two-dimensional lowpass filtering. This exploits the fact that the channel response does not change abruptly, but continuously (smoothly) in time and frequency directions.

Against this background, there is provided a channel estimator for pilot symbol aided coherent detection of multicarrier modulated radio signals in which a single radio channel comprises a plurality of sub-carriers, comprising vertical and horizontal probability calculators the function of each being to calculate probabilities on the values of input data symbols, the vertical probability calculator having data symbols which are concurrent across all sub-carriers as data input symbols, the horizontal probability calculator having data symbols which are consecutive on respective subcarriers as data input symbols, one of said probability calculators being an *a posteriori* probability calculator having *a priori* inputs provided by the probabilities calculated by the other probability calculator.

Most surprisingly, we have found that the channel estimator can be implemented with two conventional one dimensional estimators.

In a much preferred implementation, the other probability calculator is also an a posteriori probability calculator, and including: a soft in/soft out channel decoder responsive to the probability outputs of said one probability calculator, to provide probabilities on the values of information bits transmitted in the channel; and means for obtaining extrinsic information on said information bits from input probability values and the output probability values of said channel estimator said extrinsic information being presented as *a priori* inputs to said other probability calculator, and wherein the probability calculators and channel decoder operate iteratively on successive extrinsic information on one block of information bits.

The invention also extends to a method of estimating channel frequency response of multicarrier modulated radio signals in which a single radio channel comprises a plurality of sub channels, said method comprising: making a probability calculation on the values of input data symbols using data symbols which are concurrent across all subcarriers, and making a probability calculation on the values of input data symbols using data symbols which are consecutive on respective subcarriers, one of said probability calculations being an a *posteriori* probability calculation with a *priori* inputs provided by the probabilities calculated by the other probability calculation.

The invention further extends to a computer program for carrying out the method.

One embodiment of the invention will now be described, by way of example, with reference to the accompanying drawings, in which:

Figure 1 is a block diagram of a conventional multicarrier transmitter;
Figure 2 is a schematic representation of a multicarrier signal;
Figure 3 is an illustration of variation of squared magnitude of channel coefficient with time and frequency;
Figure 4 is a block diagram of a conventional multicarrier receiver;
Figure 5 is a block diagram illustrating multicarrier modulation;
Figure 6 is a block diagram illustrating multicarrier demodulation;
Figure 7 is a schematic representation of a multicarrier signal showing a distribution of pilot symbols;
Figure 8 is a block diagram of a multicarrier receiver incorporating a channel estimator embodying the invention; and

Figure 9 and 10 are schematic representation of a multicarrier signals showing advantageous distributions of pilot symbols.

In mobile communication systems the propagation conditions between base station (BS) and mobile terminal (MT) are inherently time-varying: The received signal at the MT can be affected by severe fading, depending on the terrain (hilly, rural, urban) and the speed of the MT. This makes channel estimation a demanding task at the receiver of both BS and MT.

In recent times iterative decoding algorithms have become a vital field of research in digital communications. The first discovered and still most popular encoding scheme suited for iterative decoding is the parallel concatenation of two recursive systematic convolutional codes, also referred to as 'Turbo Codes', as described in C. Berrou, A. Glavieux, P. Thitimajshima, "Near Shannon limit error-correcting coding and decoding: Turbo-codes", Proc. ICC'93, Geneva, Switzerland, May 1993, pp. 1064-1070. However, in J. Hagenauer, "The Turbo Principle: Tutorial Introduction and State of the Art", Symposium on Turbo Codes, Brest, France, September 1997, it was stated that the underlying 'Turbo Principle' is more generally applicable. And indeed, in the past few years people found other applications of the 'Turbo Principle', e.g. for the iterative decoding of serially concatenated codes, see Benedetto, S., Divsalar, D., Montorsi, G., and Pollara, F. 'Serial concatenation of interleaved codes: performance analysis, design, and iterative decoding', IEEE Trans. Inf. Theory, 1998, **44**, (3), pp. 909-926

In this embodiment, the "Turbo Principle" is applied to channel estimation for multicarrier communication systems by choosing an appropriate channel estimation algorithm which can make use of a *priori* information as fed back from the channel decoder in an iterative estimation and decoding loop.

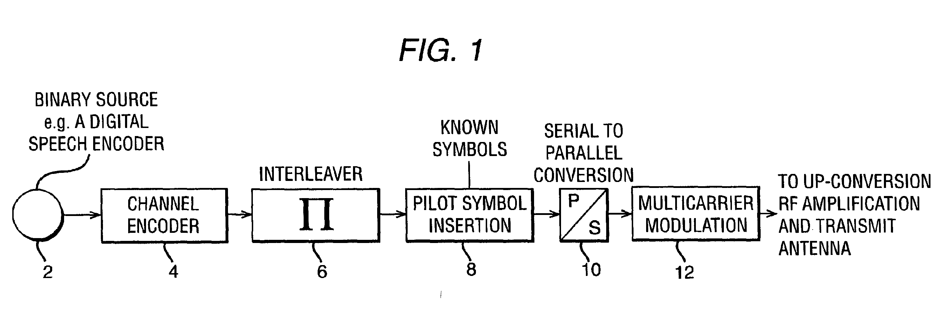

Referring to Figure 1, the data signal from a binary source 2 (e.g. digital speech encoder) is fed to a channel encoder 4 which adds redundant bits to the signal to allow for error correction at the receiver. An interleaver 6 changes the order of the incoming symbols to make the signal appear more random to the following processing stages. After interleaving, a processor 8 inserts pilot symbols into the symbol stream. The pilot symbols are known at the receiver and are used to estimate the channel response so as to obtain channel coefficients which are applied to the received signal to perform coherent detection. After serial to parallel conversion by a converter a frame of $N$ symbols is modulated, by a modulator 12, onto a plurality of sub-carriers, in this example $N$ sub-carriers, and up-converted from base band to radio frequency band (RF-band). After amplification the signal is radiated via the transmit antenna.

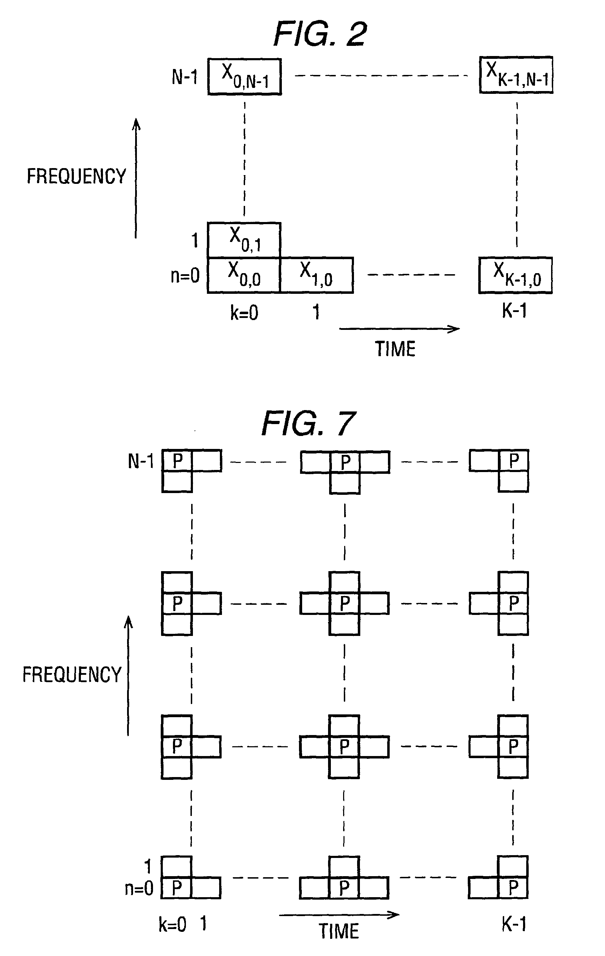

Referring to Figure 2, for each time index $k$ there is a set of $N$ parallel sub-channels in which respective sub-carriers carry the symbols $x_{k,n}$, $n=0..N$-1. The symbols $x_{k,n}$ can be from any complex QAM-alphabet (Quadrature Amplitude Modulation). For simplicity of explanation we assume BPSK (binary phase shift keying), that is, the $x_{k,n}$ can take on the values -1 or +1. The $N$ symbols $x_{k,n}$ , $n=0..N$-1 form *one multicarrier symbol* at time instant $k$. Hence, Fig. 2 shows $K$ multicarrier symbols.

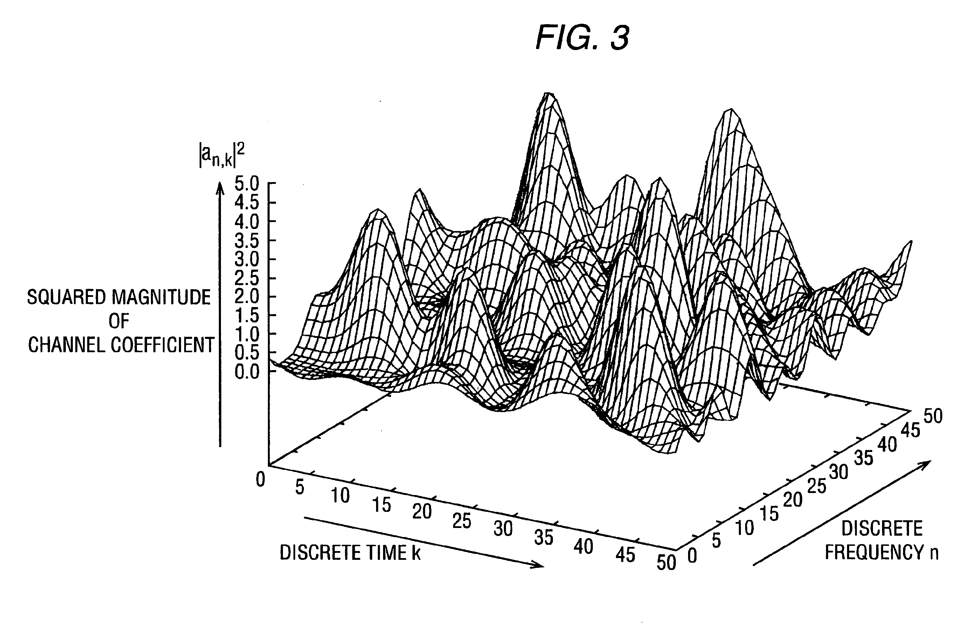

Figure 3 shows fast fading effects on channel response found on a typical mobile communication channel. Each transmitted symbol $x_{k,n}$ is, in effect, multiplied on the channel by a complex channel coefficient $a_{k,n}$ which is varying in time (index $k=0..K$-1) and frequency direction (index $n=0..N$-1). This is referred to as frequency-selective fading.

The channel coefficient $a_{k,n}$ can also be viewed as the "channel transfer function".

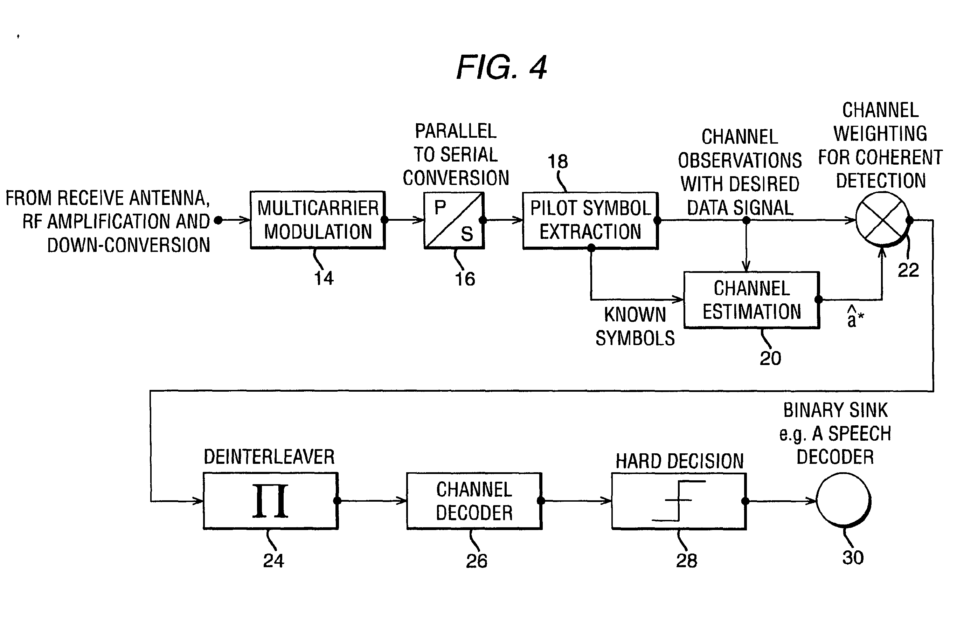

Referring to the conventional receiver shown in Figure 4, the signal from the receive antenna is amplified, down-converted to base band and analogue to digital converted. After demodulation of the $N$ sub-carrier signals by a demodulator 14, the parallel signals are converted to serial in a converter 16. The pilot symbols are extracted by a processor 18. The receiver knows the position and the value (e.g. always +1) of the pilot symbols and a channel estimator 20 thus can obtain the channel coefficients $a_{k,n}$ for these distinguished positions in the time/frequency grid of the multicarrier modulated signal. Based on these known samples $a_{k,n}$ the remaining channel coefficients are estimated in the channel estimation block by applying conventional methods of interpolation and two-dimensional lowpass filtering. These methods already exploit the fact that the channel coefficient $a_{k,n}$ does not change abruptly, but continuously (smoothly) in time and frequency direction (compare to Fig. 3). The complex-conjugates of the channel estimates $\hat{a}^*_{k,n}$ are used by a multiplier 22 to perform channel weighting for coherent detection. By this, the phase rotations on the mobile radio channel are compensated. After deinterleaving by a deinterleaver 24, the signals are decoded by a decoder 26 and a hard decision is made by a processor 28. The estimates on the transmitted bits (0,1) are then available for further processing, e.g. in a speech decoder.

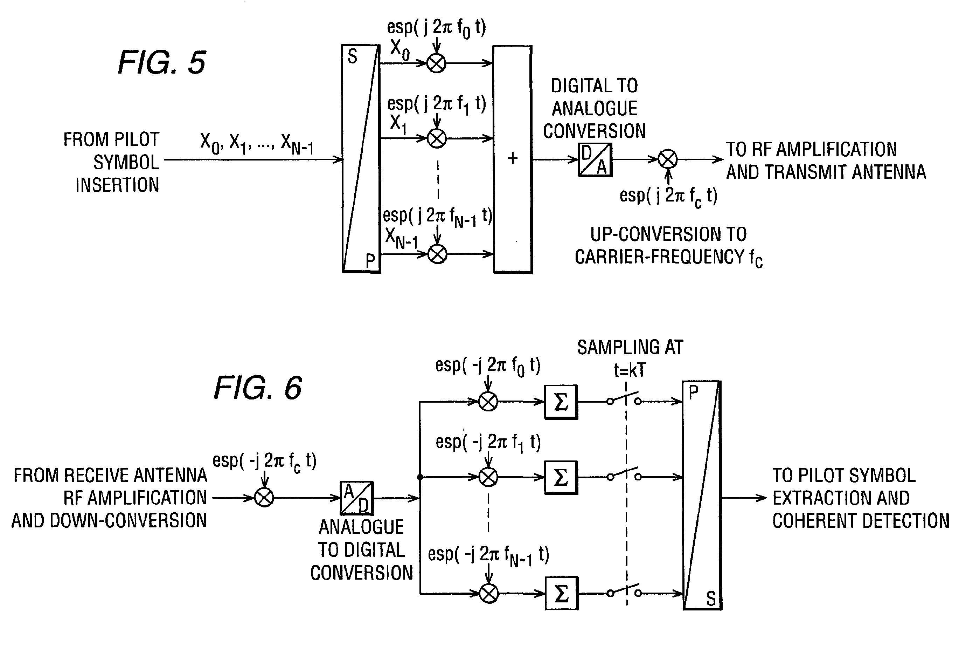

Referring to Figure 5, for multicarrier modulation, the serial symbol stream $x_k$ is converted to vectors of $N$ symbols each of which are put on $N$ contiguous (i. e. adjacent) sub-carriers with carrier frequencies $f_n$, $n = 0..N - 1$, in N sub-channels. The drawing shows the most commonly used case of rectangular pulse shaping prior to multiplication with the complex carrier exp $(j2\pi f_c t)$. The $N$ sub-carrier signals are added up and digital to analogue converted. After up-conversion from base band to radio frequency band the signal is passed on to RF amplification and radiated via the transmit antenna. The special case of multicarrier modulation with rectangular pulse shaping in combination with frequency spacing $f_n = n \cdot \Delta f$, $\Delta f = 1/T$ ($T$ duration of one multicarrier symbol) is also referred to as Orthogonal Frequency Division Modulation (or Multiplex), OFDM. For OFDM, the multicarrier modulation can be most efficiently accomplished by an inverse Fast Fourier Transform (iFFT).

Referring to Figure 6, the signal from the receive antenna is RF amplified, down-converted to base band and analogue to digital converted. The $N$ superimposed sub-carrier signals are demodulated by multiplication with the respective complex subcarrier exp $(-j2\pi f_c t)$ and accumulation over one multicarrier symbol duration $T$ (also referred to as matched filtering). After sampling and parallel to serial conversion, the signal is forwarded to pilot symbol extraction and coherent detection. For OFDM, the multicarrier demodulation can be most efficiently accomplished by a Fast Fourier Transform (FFT).

In conventional multicarrier modulated signals, pilot symbols are inserted periodically (and equidistant) in time and frequency direction to result in a rectangular pilot symbol arrangement. The insertion period is chosen according to the *sampling theorem* criterion. If the insertion period is chosen longer than postulated by the sampling theorem, a reconstruction (i.e. interpolation) of the intermediate channel coefficients by the channel estimation block is no longer possible and coherent detection fails.

Channel coding is used to make the transmitted digital information signal more robust against noise. For this the information bit sequence gets *encoded* at the transmitter by a *channel encoder* and *decoded* at the receiver by a *channel decoder.* In the encoder redundant information is added to the information bit sequence in order to facilitate the decoder to perform error correction. For example, in a *systematic* channel encoding scheme the redundant information is added to the information bit sequence just as additional inserted, 'coded' bits. Hence, the encoded signal consists of both information and coded bits. In a *non-systematic* encoding scheme the outgoing bits are *all coded* bits, and there are no 'naked' information bits anymore. The number of incoming bits (*information* bits) to the encoder is smaller than the number of outgoing bits (*information* bits plus inserted *coded* bits, or all *coded* bits). The ratio of incoming/outgoing bits is called the 'code rate $R$' (typ. $R$=1:2).

For example, prominent channel codes are block codes and convolutional codes; the latter ones can be recursive or non-recursive. For this invention it is of no relevance what kind of channel code is used.

For iterative decoding at the receiver a soft-in/ soft-out decoder (SISO-decoder) is used. A soft value (log-likelihood ratio, L-value) represents the reliability on the bit decision of the respective symbol (whether 0 or 1 was sent). A soft-in decoder accepts soft reliability values for the incoming symbols. A soft-out decoder provides soft reliability output values on the outgoing symbols. The soft-out reliability values are usually more accurate than the soft-in reliability values since they can be improved during the decoding process based on the redundant information that is added with each encoding step at the transmitter. The best performance as a SISO-decoder is provided by an A Posteriori Probability calculator (APP) tailored to the respective channel code. Several faster, but sub-optimal algorithms exist, e.g. the SOVA (soft output Viterbi algorithm).

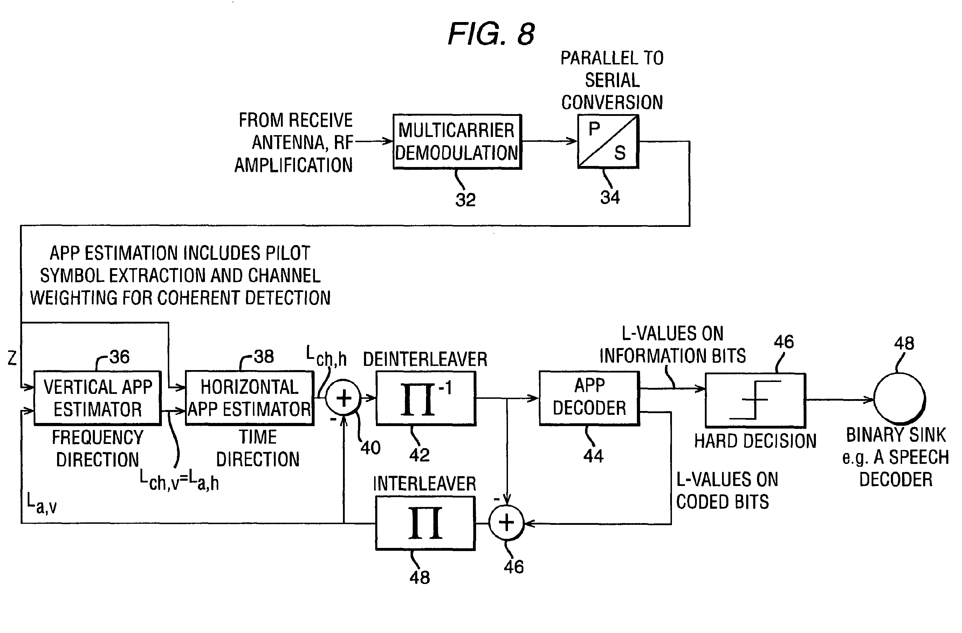

In accordance to the terminology introduced in the previous sections we now describe an embodiment of the inventive idea with reference to Fig. 8.

The transmission is done on a block-by-block basis, e.g. block size is $K \cdot N$ symbols. For each block, the signal from the receive antenna is amplified, down-converted to base band and analogue to digital converted. After demodulation of the $N$ sub-carrier signals, by a demodulator 32, and parallel to serial conversion, by a converter 34, the signal is fed to a first, vertical, APP estimator 36 and to a second, horizontal, APP estimator 38 (APP, A Posteriori Probability calculator).

The *vertical* estimator 36 performs one-dimensional channel estimation in *frequency* direction. The *horizontal* estimator 38 performs one-dimensional channel estimation in *time* direction.

The inputs to the vertical APP estimator are the noise and fading affected channel concurrent observations Z (i.e. unprocessed discrete-time signal from channel) from one set of parallel subchannels, and *a priori* L-values $L_{a,v}$ (time/frequency indices $k,m$ omitted for L-values) as fed back from the channel decoder. The pilot symbols are included into the APP estimation as "perfect *a priori* knowledge" (i.e. big positive or negative L-value) at the respective positions. The vertical APP estimator uses a conventional algorithm to interpolate between the channel coefficients obtained for the sub-channels containing pilot symbols to obtain estimates of the coefficients in sub channels which do not include a pilot symbol at this time. For the remaining positions the vertical *a priori* L-values $L_{a,v}$ are set to zero for the very first pass through the estimator and decoder. The conjugates of the channel coefficients are obtained and used to multiply the observed value in respective subchannels to obtain estimated channel L-values $L_{ch,v}$ which are forwarded as *a priori* input $L_{a,h} = L_{ch,v}$ to the horizontal APP estimator.

The horizontal APP estimator acts conventionally on the *a priori* input $L_{a,h}$ and channel observations Z occurring from symbol to symbol in individual subchannels, to calculate improved horizontal channel L-values $L_{ch,h}$. After subtracting vertical *a priori* knowledge $L_{a,v}$ in a subtractor 40, the signal is passed on to a deinterleaver 42.

After deinterleaving the signal is decoded in a soft in/soft out channel decoder.44 In the iterative decoding path "outer extrinsic information" on the *coded* bits is obtained by a subtractor 46, passed through and interleaver 48 and fed back as *a priori* knowledge to the vertical APP estimator. The "outer extrinsic" information is the difference of the soft input/soft output values (i.e. L-values) at the channel decoder and depicts the new, statistically independent information (at least for the first iteration) gained by the decoding process. Correspondingly, the estimator provides improved channel L-values.

L-values are a representation of probabilities, which is more suited for use in hardware and software implementation.

Say we have a probability value P, $0 \Omega P \Omega I$; then the associated L-value is $L = \ln 1-P$, $-\infty < L$, $< \infty$, where "ln" denotes the natural logarithm to base "e=2.718..."

The L-values are reliability values of the quality of the decoded signal. The feedback of these values helps to reduce the bit error rate of the hard decision values 0,1 at the output of the decoder in further, iterative decoding steps. The iterative decoding of a particular transmitted block is stopped with an arbitrary termination criterion, e.g. after a fixed number of iterations, or until a certain bit error rate is reached (the termination criterion is not important for the invention).

The hard reliability values on the *information* bits need to be calculated by a hard decision processor 46 only once for each block, namely in the final pass (last iteration) through the outer decoder. The hard decision values (0,1) on the information bits are further processed in, e.g., a speech decoder 48.

Separate one-dimensional APP estimation in frequency (i.e. vertical) and time (i.e. horizontal) direction is possible owing two the two-dimensional continuity of the channel transfer function. The channel coefficient $a_{k,n}$ does not change abruptly but continuously (smoothly) in time and frequency direction, compare to Fig. 3.

For APP estimation, the symbol-by-symbol MAP-algorithm (also referred to as A Posteriori Probability calculator, APP) is applied to an appropriately chosen metric. At frequency index $n$ (time index $k$ omitted), the vertical APP estimation (frequency direction) for BPSK-modulated signals is characterised by the metric increment $\gamma_n = \mathrm{Re}\{z_n \cdot b_n \cdot \hat{a}^*_{v,n}\}/2\sigma^2_{v,pred} + \frac{1}{2}L_{a,v,n}$ with estimated channel coefficient

$$\hat{a}_{v,n} = \sum_{i=1}^{m_v} c_{v,i} \cdot z_{n-i} \cdot \hat{b}_{n-i}$$

(FIR-filter of order $m_v$), whereby the vertical FIR-filter coefficients $c_{v,i}$ are based on the frequency auto-correlation function of the channel transfer function. The variable $z_n$ denotes the received channel observations, $b_n$ the hypothesis on the transmitted bits (-1, +1), $L_{a,v,n}$ the vertical *a priori* L-values and $\sigma^2_{v,pred}$ the variance of the vertical estimation error. The asterisk (*) is the complex-conjugate operator.

Accordingly, at time index $k$ (frequency index $n$ omitted), the horizontal APP estimation (time direction) is characterised by the metric increment $\gamma_k = \mathrm{Re}\{z_k$

$\cdot b_k \cdot \hat{a}^*_{h,k}\}/2\sigma^2_{h,pred} + \frac{1}{2}L_{a,h,k}$ with estimated channel coefficient

$$\hat{a}_{h,k} = \sum_{i=1}^{m_h} c_{h,i} \cdot z_{k-i} \cdot \hat{b}_{k-i}$$

(FIR-filter of order $m_h$), whereby the horizontal FIR-filter coefficients $c_{h,i}$ are based on the auto-correlation function in time direction. The $L_{a,h,k}$ denote the horizontal *a priori* L-values.

It is surprising that one can connect vertical and horizontal estimator in the way as described above: Conceptually, $L_{ch,v}$ is not statistically independent from the channel observations Z and thus it does not appear to be suited as *a priori* knowledge $L_{a,h}$ for the horizontal estimation. However, the vertical and horizontal channel estimates $\hat{a}_{v,k}$, $\hat{a}_{h,k}$ are independent. It is important to notice that the uncertainty in channel estimation dominates at the beginning of the iteration which means that $L_{ch,v}$ stays fairly uncorrelated from Z and thus contributes to significantly improve the horizontal estimation if used as *a priori* input. This effect was confirmed by simulations.

The order of the estimation can be swapped: first horizontal, second vertical estimation.

Simulation results show that the proposed channel estimation algorithm requires fewer pilot symbols to achieve the same bit error rate and is much more robust to a change in the statistics of the mobile communication channel than conventional methods. Additionally, the FIR-filter coefficients can be chosen in a rather "relaxed" manner: For most cases a lowpass behaviour of said FIR-filters is all that is needed in practice.

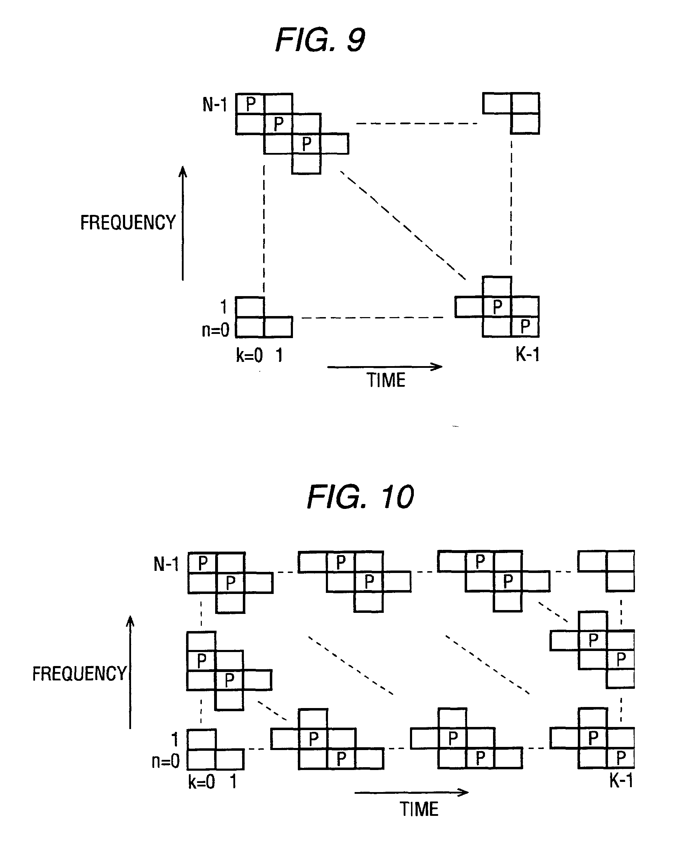

For the channel estimation algorithm described, the *sampling theorem* is no longer the crucial criterion to dominate the pilot symbol insertion period. This is because the inventive channel estimation algorithm can make use of the *redundancy* of the channel code in an iterative estimation and decoding loop. Hence, the pilot symbol arrangements can be somewhat arbitrary. Preferably the pilot symbols are arranged in diagonal order such that each pilot symbol contributes to improved estimation in both vertical and horizontal direction. In contrast with the examples illustrated in Figures 9 and 10, if we arranged all $K$ pilot symbols in a single column (e.g. time column $k$=0), only the horizontal estimation and one vertical estimation at $k$=0 could benefit from the pilot symbols. For time columns $k$=1..$K$-1 not even a single pilot symbol would be available. However, the even with that arrangement, the channel estimator outperforms the conventional channel estimation algorithms for rectangular or similar "sampling theorem criterion"-based pilot symbol arrangements. This makes it readily applicable to current multicarrier systems such as DVB-T without needing to change the transmission format.

## Claims

1. A channel estimator for pilot symbol aided coherent detection of multicarrier modulated radio signals in which a single radio channel comprises a plurality of sub-carriers, comprising vertical and horizontal probability calculators the function of each being to calculate probabilities on the values of input data symbols, the vertical probability calculator having data symbols which are concurrent across all sub-carriers as data input symbols, the horizontal probability calculator having data symbols which are consecutive on respective subcarriers as data input symbols, one of said probability calculators being an *a posteriori* probability calculator having *a priori* inputs provided by the probabilities calculated by the other probability calculator.

2. A channel estimator as claimed in claim 1, wherein the other probability calculator is also an a posteriori probability calculator, and including: a soft in/soft out channel decoder responsive to the probability outputs of said one probability calculator, to provide probabilities on the values of information bits transmitted in the channel; and means for obtaining extrinsic information on said information bits from input probability values and the output probability values of said channel estimator, said extrinsic information being presented as *a priori* inputs to said other probability calculator, and wherein the probability calculators and channel decoder operate iteratively on successive extrinsic information on one block of information bits.

3. A method of estimating channel response of multicarrier modulated radio signals in which a single radio channel comprises a plurality of sub channels, said method comprising: making a probability calculation on the values of input data symbols using data symbols which are concurrent across all subcarriers, and making a probability calculation on the values of input data symbols using data symbols which are consecutive on respective subcarriers, one of said probability calculations being an *a posteriori* probability calculation with *a priori* inputs provided by the probabilities calculated by the other probability calculation.

4. A method as claimed in claim 3, wherein the other probability calculation is also an a posteriori probability calculation, and including: a soft in/soft out channel decodind step responsive to the probability outputs of said one probability calculator, to provide probabilities on the values of information bits transmitted in the channel; and obtaining extrinsic information on said information bits from input probability values and the output probability values of said channel estimator, said extrinsic information being presented as a *priori* inputs to said other probability calculator, and wherein the probability calculation steps and channel decoding steps operate iteratively on successive extrinsic information on one block of information bits.

5. A method as claimed in claim 4, in which estimation by one or other of the probability calculations is excluded after a number of iterations, further iterations being performed using only one of the probability calculations.

6. A computer program for carrying out the method steps of either of claims 3 or 4.

*FIG. 1*

BINARY SOURCE e.g. A DIGITAL SPEECH ENCODER — 2

CHANNEL ENCODER — 4

INTERLEAVER — Π — 6

PILOT SYMBOL INSERTION — 8 (KNOWN SYMBOLS)

SERIAL TO PARALLEL CONVERSION — P/S — 10

MULTICARRIER MODULATION — 12

TO UP-CONVERSION RF AMPLIFICATION AND TRANSMIT ANTENNA

## FIG. 2

N-1 $X_{0,N-1}$ ------- $X_{K-1,N-1}$

FREQUENCY

1 $X_{0,1}$

n=0 $X_{0,0}$ $X_{1,0}$ ----- $X_{K-1,0}$

k=0    1        K-1

TIME

## FIG. 7

N-1 P ----- P ----- P

P ---- P ---- P

FREQUENCY

P ---- P ---- P

1

n=0 P ----- P ----- P

k=0 1      TIME      K-1

FIG. 3

EP 1 154 602 A1

*FIG. 4*

EP 1 154 602 A1

## FIG. 5

FROM PILOT
SYMBOL
INSERTION

$X_0, X_1, ..., X_{N-1}$

S

P

$esp(j\ 2\pi\ f_0\ t)$
$X_0$

$esp(j\ 2\pi\ f_1\ t)$
$X_1$

$esp(j\ 2\pi\ f_{N-1}\ t)$
$X_{N-1}$

+

DIGITAL TO
ANALOGUE
CONVERSION

D/A

$esp(j\ 2\pi\ f_c\ t)$

UP-CONVERSION TO
CARRIER-FREQUENCY $f_c$

TO RF AMPLIFICATION
AND TRANSMIT ANTENNA

## FIG. 6

FROM RECEIVE ANTENNA
RF AMPLIFICATION
AND DOWN-CONVERSION

$esp(-j\ 2\pi\ f_c\ t)$

A/D

ANALOGUE
TO DIGITAL
CONVERSION

$esp(-j\ 2\pi\ f_0\ t)$

$\Sigma$

$esp(-j\ 2\pi\ f_1\ t)$

$\Sigma$

$esp(-j\ 2\pi\ f_{N-1}\ t)$

$\Sigma$

SAMPLING AT
t=kT

P

S

TO PILOT SYMBOL
EXTRACTION AND
COHERENT DETECTION

## FIG. 8

FROM RECEIVE ANTENNA, RF AMPLIFICATION → MULTICARRIER DEMODULATION **32** → PARALLEL TO SERIAL CONVERSION P/S **34**

APP ESTIMATION INCLUDES PILOT SYMBOL EXTRACTION AND CHANNEL WEIGHTING FOR COHERENT DETECTION

Z → VERTICAL APP ESTIMATOR **36** FREQUENCY DIRECTION → HORIZONTAL APP ESTIMATOR **38** TIME DIRECTION

$L_{ch,v}=L_{a,h}$

$L_{a,v}$

$L_{ch,h}$ → ⊕ **40** → DEINTERLEAVER $\Pi^{-1}$ **42** → APP DECODER **44** → L-VALUES ON INFORMATION BITS → HARD DECISION **46** → BINARY SINK e.g. A SPEECH DECODER **48**

INTERLEAVER $\Pi$ **48** → ⊕ **46** → L-VALUES ON CODED BITS

EP 1 154 602 A1

## FIG. 9

## FIG. 10

EP 1 154 602 A1

EUROPEAN SEARCH REPORT

**European Patent Office**

Application Number

EP 00 30 3886

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| A | LI Y G ET AL: "ROBUST CHANNEL ESTIMATION FOR OFDM SYSTEMS WITH RAPID DISPERSIVE FADING CHANNELS" IEEE TRANSACTIONS ON COMMUNICATIONS,US,IEEE INC. NEW YORK, vol. 46, no. 7, 1 July 1998 (1998-07-01), pages 902-915, XP000779691 ISSN: 0090-6778 * abstract * * page 902, right-hand column, line 6 - line 16 * * page 904, right-hand column, line 11 - line 22 * * page 905, right-hand column, line 15 - line 33 * * page 906, left-hand column, line 2 - line 7 * | 1,3 | H04L25/02 H04L27/26 |
| A | HOEHER P ET AL: "Two-dimensional pilot-symbol-aided channel estimation by Wiener filtering" 1997 IEEE INTERNATIONAL CONFERENCE ON ACOUSTICS, SPEECH, AND SIGNAL PROCESSING (CAT. NO.97CB36052), 1997 IEEE INTERNATIONAL CONFERENCE ON ACOUSTICS, SPEECH, AND SIGNAL PROCESSING, MUNICH, GERMANY, 21-24 APRIL 1997, pages 1845-1848 vol.3, XP002150556 1997, Los Alamitos, CA, USA, IEEE Comput. Soc. Press, USA ISBN: 0-8186-7919-0 * abstract * * page 1846, left-hand column, line 2 - line 22 * | 1,3 | TECHNICAL FIELDS SEARCHED (Int.Cl.7) H04L |

-/--

The present search report has been drawn up for all claims

| Place of search | Date of completion of the search | Examiner |
|---|---|---|
| THE HAGUE | 25 October 2000 | Papantoniou, A |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

14

**European Patent Office**

## EUROPEAN SEARCH REPORT

Application Number

EP 00 30 3886

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| A | JIN YOUNG KIM: "Performance of OFDM/CDMA system with turbo coding in a multipath fading channel" IEEE TRANSACTIONS ON CONSUMER ELECTRONICS, MAY 1999, IEEE, USA, vol. 45, no. 2, pages 372-379, XP002150557 ISSN: 0098-3063 * abstract; figure 3 * * page 376, left-hand column, line 33 - right-hand column, line 24 * | 1,3 | |
| A | SANDELL M ET AL: "ITERATIVE CHANNEL ESTIMATION USING SOFT DECISION FEEDBACK" IEEE GLOBAL TELECOMMUNICATIONS CONFERENCE,US,NEW YORK, NY: IEEE, 1998, pages 3728-3733, XP000805320 ISBN: 0-7803-4985-7 * abstract; figure 1 * * page 3728, right-hand column, line 29 - page 3729, left-hand column, line 3 * * page 3730, left-hand column, line 18 - line 29 * | 1,3 | |

TECHNICAL FIELDS SEARCHED (Int.Cl.7)

The present search report has been drawn up for all claims

| Place of search | Date of completion of the search | Examiner |
|---|---|---|
| THE HAGUE | 25 October 2000 | Papantoniou, A |